Europäisches Patentamt

European Patent Office

Office européen des brevets

(11) Publication number: **0 369 305**

**A1**

## (12) EUROPEAN PATENT APPLICATION

(21) Application number: **89120651.8**

(22) Date of filing: **08.11.89**

(51) Int. Cl.5: **G21C 3/326**

(30) Priority: **14.11.88 US 270560**

(43) Date of publication of application:
**23.05.90 Bulletin 90/21**

(84) Designated Contracting States:
**BE DE ES FR GB IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Cooney, Barry Francis**
**365 Cypress Hill Drive**
**Pittsburgh Pennsylvania 15235(US)**
Inventor: **Kovacik, William Peter**
**637 Westland Drive**
**Greensburg Pennsylvania 15601(US)**

(74) Representative: **Fleuchaus, Leo, Dipl.-Ing. et al**
**Patentanwälte Helmut Schroeter, Klaus**
**Lehmann, Wulf Wehser, Rupprecht Holzer,**
**Wolfgang Gallo Ludwigstrasse 26**
**D-8900 Augsburg(DE)**

(54) **Fuel assembly containing fuel rods having standardized-length burnable absorber integral with fuel pellets and method of customizing fuel assembly.**

(57) A fuel assembly (10) having a plurality of spaced apart fuel rods (18) includes at least two groups of fuel rods (18A, 18B). In each of the two groups (18A, 18B), each fuel rod contains first and second pluralities of nonpoisoned and poisoned fuel pellets (34A, 34B). The plurality of poisoned fuel pellets (34B) in each fuel rod of the first group (18A) is of a first standard length, whereas the plurality of poisoned fuel pellets (34B) in each fuel rod of the second group (18B) is of a second standard length different than the first standard length. The first and second standard lengths of the pluralities of poisoned fuel pellets (34B) of the two groups of fuel rods (18A, 18B) provide an overall average length of burnable poison across the fuel assembly (10). The fuel assembly (10) also contains a third group of fuel rods (18C) only containing a plurality of nonpoisoned fuel pellets (34A).

FIG. 2

## FUEL ASSEMBLY CONTAINING FUEL RODS HAVING STANDARDIZED-LENGTH BURNABLE ABSORBER INTEGRAL WITH FUEL PELLETS AND METHOD OF CUSTOMIZING FUEL ASSEMBLY

The present invention relates generally to nuclear reactors and, more particularly, is concerned with an improved fuel assembly containing fuel rods having standardized-length burnable absorber integral with fuel pellets and a method of customizing the fuel assembly.

In a typical nuclear reactor, the reactor core includes a large number of fuel assemblies each of which is composed of top and bottom nozzles with a plurality of elongated transversely spaced guide thimbles extending between the nozzles and a plurality of transverse grids axially spaced along the guide thimbles. Also, each fuel assembly is composed of a plurality of elongated fuel elements or rods transversely spaced apart from one another and from the guide thimbles and supported by the grids between the top and bottom nozzles. The fuel rods each contain fissile material and are grouped together in an array which is organized so as to provide a neutron flux in the core sufficient to support a high rate of nuclear fission and thus the release of a large amount of energy in the form of heat. A liquid coolant is pumped upwardly through the core in order to extract some of the heat generated in the core for the production of useful work.

Since the rate of heat generation in the reactor core is proportional to the nuclear fission rate, and this, in turn, is determined by the neutron flux in the core, control of heat generation at reactor start-up, during its operation and at shutdown is achieved by varying the neutron flux. Generally, this is done by absorbing excess neutrons using control rods which contain neutron absorbing material. The guide thimbles, in addition to being structural elements of the fuel assembly, also provide channels for insertion of the neutron absorber control rods within the reactor core. The level of neutron flux and thus the heat output of the core is normally regulated by the movement of the control rods into and from the guide thimbles.

Also, it is conventional practice to design an excessive amount of neutron flux into the reactor core at start-up so that as the flux is depleted over the life of the core there will still be sufficient reactivity to sustain core operation over a long period of time. In view of this practice, one approach in some reactor applications is to use discrete burnable absorber or poison rods to control this excess reactivity. The poison rods are inserted within the guide thimbles of some fuel assemblies to assist the control rods in the guide thimbles of other fuel assemblies in maintaining the neutron flux or reactivity of the reactor core relatively constant over its lifetime. The burnable poison rods, like the control rods, contain neutron absorber material. They differ from the control rods mainly in that they are maintained in stationary positions within the guide thimbles during their period of use in the core. The overall advantages to be gained in using discrete burnable poison rods at stationary positions in a nuclear reactor core are disclosed in U. S. Patents to Rose (3,361,857) and to Wood (3,510,398).

One practice in reactor core power distribution control is the use of burnable absorber rods having reduced lengths for the maximization of peaking factor margin. This practice involves the provision of custom-designed lengths and placements of the reduced length burnable absorber or poison rods. However, such practice presents potentially significant manufacturing and handling difficulties. First, it precludes the manufacturing facility from being able to build rods from a standard inventory and can require a significant additional non-standard inventory (to cover manufacturing yield problems) that is unusable after completion of the reduced length rods for one particular reload region of the core. Second, handling of reduced length burnable absorber rod clusters when loading or unloading the reactor core entails considerable difficulty.

To overcome these difficulties, more recently a discrete standardized length burnable absorber rod has been proposed as disclosed in U. S. Patent 4,728,487 to Cooney et al., assigned to the same assignee as the present invention. The standardized length burnable absorber rod is composed of three separate parts which, when assembled from standardized pre-manufactured parts, provides the reactor core power distribution control capability of the custom-designed reduced length burnable absorber rod that has been available heretofore. The standardized design concept provides several advantages over the custom-designed or custom-fit concept. First, the absorber section, which is typically the most expensive part, can be provided as a small set of standard lengths, enabling the manufacturing facility to build from standardized inventory without sacrificing the peaking factor margin of the custom-fit design. Second, all burnable absorber rods will always be of the sale overall height, eliminating any problems with handling. Third, providing the right kind of reduced length burnable absorber rod in an emergency situation becomes a matter of the assembly, rather than the manufacture, of the rod which drastically reduces emergency response time.

While discrete burnable absorber rods have proven reliable in controlling reactivity, they have certain drawbacks. First, they continue to absorb neutrons later in the core cycle when this is no longer necessary. This creates a residual reactivity penalty and inhibits economic fuel use. Second, discrete burnable absorber rods displace cooling water which reduces the number of hydrogen atoms and thus neutrons are used less efficiently. The hydrogen atoms in cooling water encourage fission events by slowing down neutrons to the right pace. Third, at the end of use, the discrete burnable absorber rods and the hardware associated therewith must be disposed of.

Consequently, a need exists for an alternative approach to control of excess reactivity which will retain the advantages introduced by the standardized design concept while eliminating the above-described drawbacks associated with discrete burnable absorber rods.

It is thus an object of the present invention to provide an improved fuel assembly and method of customizing the fuel assembly designed to retain the advantages of the standardized design approach while avoiding the drawbacks of the discrete burnable absorber rod approach by modifying an alternative prior art approach to controlling reactivity.

This alternative prior art approach is the use of integral fuel burnable absorber (IFBA) rods, such as has been devised by the assignee of the present invention in a PWR fuel assembly known commercially as the VANTAGE 5. Use of IFBA rods eliminates the residual reactivity penalty. They also burn out more efficiently and completely than the water-displacing discrete burnable absorber rods.

As provided heretofore in the VANTAGE 5 nuclear fuel assembly manufactured and marketed by the assignee herein, IFBA rods are fuel rods which have some fuel pellets which contain burnable absorber or poison material. Specifically, end-to-end arrangements, or strings, of fuel pellets containing no poison material are provided at upper and lower end sections of the fuel pellet stack of the fuel rod and a string of fuel pellets containing poison material is provided at the middle section of the stack. The latter fuel pellets contain normal enriched uranium pellets with a thin coating of burnable neutron absorber placed on the circumferential cylindrical surface thereof. The coating is preferably zirconium diboride ($ZrB_2$), in which the boron-10 isotope is an effective neutron absorber. Alternatively, fuel pellets can be used that are composed of a burnable absorber or poison material, such as gadolinia, mixed integrally with the enriched uranium fuel.

Underlying the present invention is a recognition that the standardized design concept originated in connection with the discrete burnable absorber rods can be applied to the prior art IFBA rods so as to permit elimination of discrete burnable absorber rod use. With respect to the standardized-length discrete burnable absorber rods, the cluster of mixed length burnable absorber parts making up the discrete parts of the rods and sharing a common centerline behaves neutronically as if it was a cluster of uniform length absorber rods of the average length of the mixed cluster.

However, it is perceived by the invention herein that this behavior is not limited to separate (lumped) burnable absorber rods. IFBA rods (both Zirconium diboride coated and gadolinia mixed) will behave in the same fashion. If the lengths of the strings of poisoned fuel pellets in the fuel rods of a given fuel assembly are arranged such that they comprise a relatively small number (2 to 5) of standard lengths mixed together, the neutronic behavior of that assembly will be very similar to that of one whose rods are all of the same average length. This behavior makes possible the production of custom-designed absorber lengths in the fuel rods from a selection of a few standard lengths of poisoned fuel pellet strings.

Accordingly, the present invention is set forth in a fuel assembly containing fuel rods having standardized-length burnable absorbers integral with the fuel pellets. Each fuel assembly includes: (a) a first group of fuel rods each containing first and second pluralities of nonpoisoned and poisoned fuel pellets, the second plurality of poisoned fuel pellets in each fuel rod of the first group being of a first standard length; and (b) a second group of fuel rods each containing third and fourth pluralities of nonpoisoned and poisoned fuel pellets, the fourth plurality of poisoned fuel pellets in each fuel rod of the second group being of a second standard length different than the first standard length. The second and fourth pluralities of poisoned fuel pellets provide an overall average length of burnable poison across the fuel assembly. The fuel assembly also includes a third group of fuel rods containing a plurality of nonpoisoned fuel pellets only.

More particularly, each fuel rod contains the same number of total fuel pellets, each pellet having the same axial length. Also, in one embodiment, each poisoned fuel pellet is composed of a mixture of a poison and uranium. In an alternative embodiment, each poisoned fuel pellet is composed of a cylinder of uranium and a coating of a poison applied around a continuous outer cylindrical circumferential surface of the uranium cylinder.

The present invention is also directed to a method for customizing a fuel assembly to provide a burnable poison of an average length across the assembly. The customizing method comprises: (a) assembling a first group of fuel rods each containing first and second pluralities of nonpoisoned and poisoned fuel pellets wherein the second plurality of poisoned fuel pellets in each fuel rod of the first group being of a first standard length; and (b) assembling with the first group of fuel rods a second group of fuel rods each containing third and fourth pluralities of nonpoisoned and poisoned fuel pellets wherein the fourth plurality of poisoned fuel pellets in each fuel rod of the second group being of a second standard length different than the first standard length, the second and fourth pluralities of poisoned fuel pellets providing an overall average length of burnable poison across the fuel assembly. Further, the method includes the step of assembling with the first and second groups of fuel rods a third group of fuel rods containing only a plurality of nonpoisoned fuel pellets.

The invention will become more readily apparent from the following description of the preferred embodiment thereof, shown by way of example only, in the accompanying drawings wherein:

Figure 1 is an elevational view, partly in section, of an improved fuel assembly of the present invention, the assembly being illustrated in vertically foreshortened form with parts broken away for clarity.

Figs. 2 and 3 are enlarged foreshortened longitudinal axial sectional views of exemplary fuel rods of the fuel assembly of Figs 1, with middle sections having end-to-end arrangements or strings of burnable absorber coated fuel pellets of two different standardized lengths and with upper and lower sections having strings of uncoated fuel pellets.

Fig. 4 is an enlarged longitudinal axial sectional view of one uncoated fuel pellet of the fuel rods of Figs. 2 and 3.

Fig. 5 is a cross-sectional view of the uncoated fuel pellet taken along line 5--5 of Fig. 4.

Fig. 6 is an enlarged longitudinal axial sectional view of one burnable absorber coated fuel pellet of the fuel rods of Figs. 2 and 3.

Fig. 7 is a cross-sectional view of the coated fuel pellet taken along line 7--7 of Fig. 6.

Fig. 8 is a schematic plan view of the improved fuel assembly illustrating one mixed array of uncoated fuel rods and of burnable absorber coated fuel rods of the two different standard lengths.

Fig. 9 is a schematic plan view of the improved fuel assembly illustrating another mixed array of uncoated fuel rods and of burnable absorber coated fuel rods of the two different standard lengths.

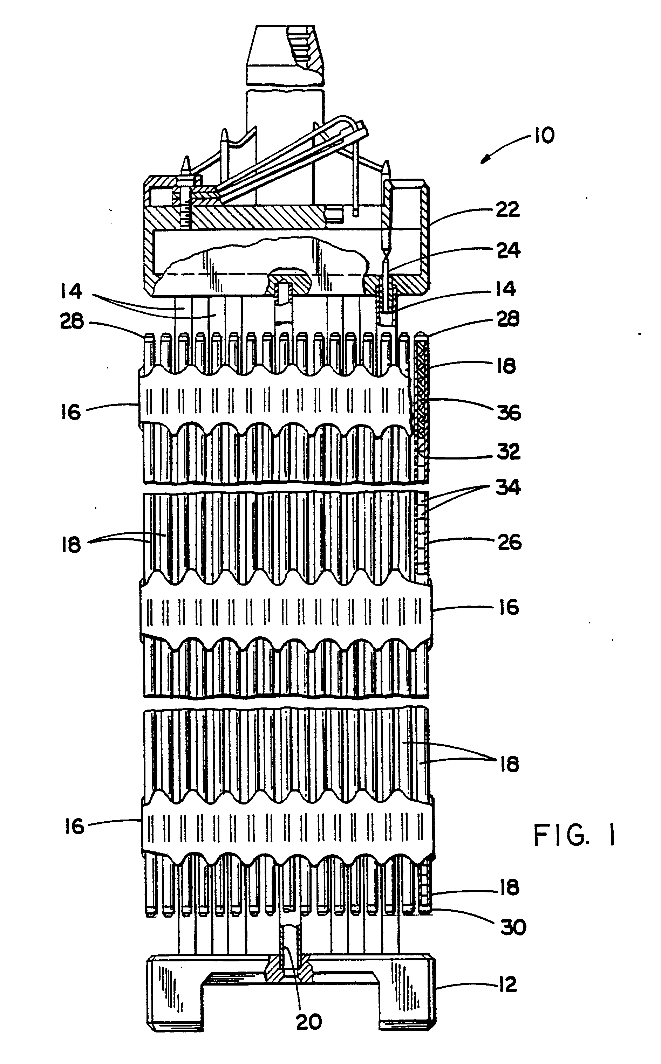

Referring now to the drawings, and particularly to Fig. 1, there is shown an elevational view of a fuel assembly, represented in vertically foreshortened form and being generally designated by the numeral 10. The fuel assembly 10 is the type used in a pressurized water reactor (PWR) and basically includes a lower end structure or bottom nozzle 12 for supporting the assembly on the lower core plate (not shown) in the core region of a reactor (not shown), and a number of longitudinally extending guide tubes or thimbles 14 which project upwardly from the bottom nozzle 12. The assembly 10 further includes a plurality of transverse grids 16 axially spaced along the guide thimbles 14 and an organized array of elongated fuel rods 18 transversely spaced and supported by the grids 16. Also, the assembly 10 has an instrumentation tube 20 located in the center thereof and an upper end structure or top nozzle 22 attached to the upper ends of the guide thimbles 14. With such an arrangement of parts, the fuel assembly 10 forms an integral unit capable of being conveniently handled without damaging the assembly parts.

In the operation of a PWR it is desirable to prolong the life of the reactor core as long as feasible to better utilize the uranium fuel and thereby reduce fuel costs. To attain this objective, it is common practice to provide an excess of reactivity initially in the reactor core and, at the same time, provide means to maintain the reactivity relatively constant over its lifetime. One means for achieving this as proposed by the above-cited prior art. U. S. Patent 4,728,487 involves the use of a cluster of discrete standardized reduced length burnable absorber rods (not shown) which are stationarily supported by a holddown assembly (not shown) in the guide thimbles 14 of some of the fuel assemblies to assist movable control rods 24 in the guide thimbles 14 of other fuel assemblies 10 in maintaining a substantially constant level of neutron flux or reactivity in the core throughout its operating cycle.

While discrete burnable absorber rods have proven reliable in controlling reactivity, they continue to absorb neutrons later in the core cycle when this is no longer necessary. This creates a residual reactivity penalty and inhibits economic fuel use. The hydrogen atoms in cooling water encourage fission events by slowing down neutrons to the right pace. When discrete burnable absorber rods are used to control reactivity, water is displaced so the number of hydrogen atoms is reduced and neutrons are used less efficiently.

One prior art alternative approach to controlling reactivity is to use fuel rods which are referred to as integral fuel burnable absorber (IFBA) rods. As provided in the prior art VANTAGE 5 nuclear fuel assembly manufactured and marketed by the assignee herein, IFBA rods are fuel rods which have some fuel pellets which contain burnable absorber or poison material. Specifically, end-to-end arrangements, or strings, of fuel pellets containing no poison material are provided at upper and lower end sections of the fuel pellet stack of the fuel rod and a string of fuel pellets containing poison material is provided at the middle section of the stack. The latter fuel pellets contain normal enriched uranium pellets with a thin coating of burnable neutron absorber placed or deposited on the circumferential cylindrical surface thereof. The coating is preferably zirconium diboride ($ZrB_2$), in which the boron-10 isotope is an effective neutron absorber. Alternatively, fuel pellets can be used that are composed of a burnable absorber or poison materials such as gadolinia, mixed integrally with the enriched uranium fuel.

Use of these prior art IFBA rods eliminates the disadvantages associated with the water-displacing discrete burnable absorber rods and provide the following benefits. The IFBA rods selectively moderate the rate of fission and power contribution of fresh fuel at the beginning of a core cycle. Core reactivity margins are therefore retained at the outset of a fuel cycle, while higher fuel enrichments -- affording energy for extended core cycles and higher burnups -- are accommodated. As core burnup progresses, and excess reactivity diminishes, the inventory of unreacted boron on the pellet surface likewise diminishes. Thus the reactivity contribution of IFBA coated uranium becomes more effective as fuel burnup progresses. The result is a delayed reactivity and energy contribution from the coated fuel. Since the boron is depleted with burnup, only a very small parasitic effect on reactivity and energy production results at the end of core life. This means there is negligible compromise in fuel utilization. In fact, since IFBAs can be utilized in any fresh fuel assembly (including assemblies placed under a control rod position), more innovative fuel loading patterns can be used, thus enhancing fuel utilization even more.

The present invention modifies the IFBA rod approach to controlling reactivity so that it also embodies the advantages of the standardized design approach proposed heretofore with respect to discrete burnable absorber rods. However, the present invention avoids the drawbacks of the discrete burnable absorber rod approach while retaining the benefits of the IFBA rod approach to controlling reactivity. This is done by providing a fuel assembly containing fuel rods each having standardized-length burnable absorbers integral with the fuel pellets within each rod.

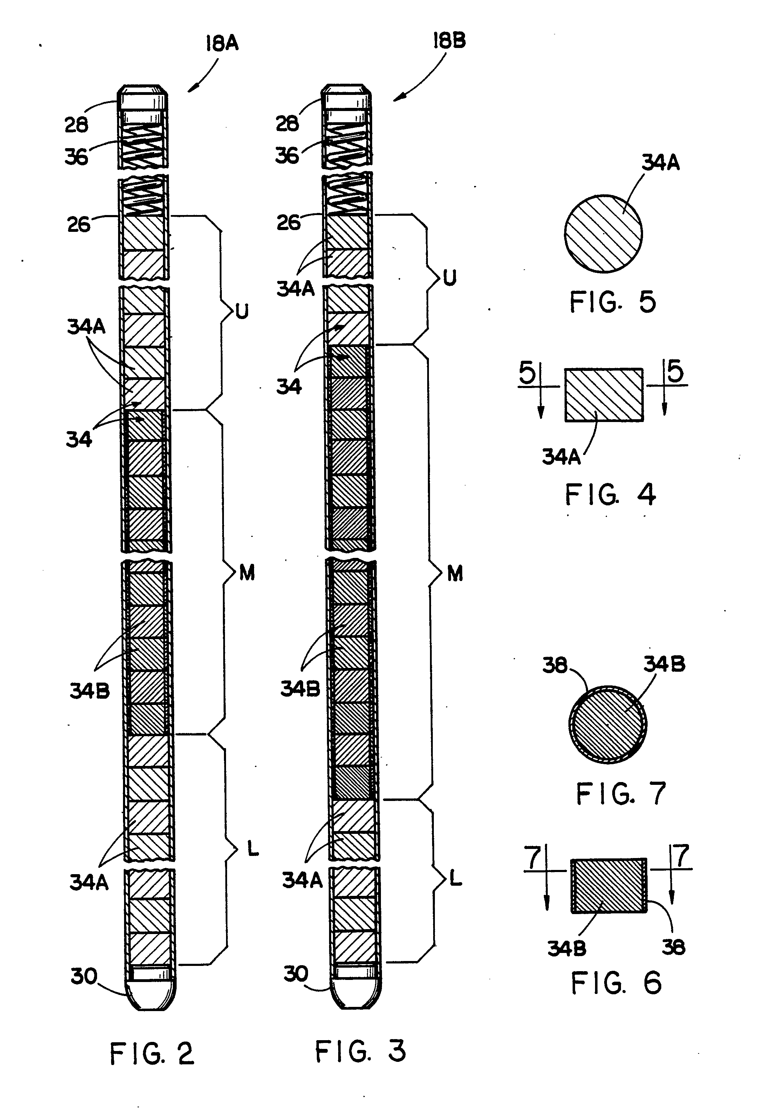

Figs. 2 and 3 illustrate exemplary fuel rods 18A, 18B of the fuel assembly 10 of Fig. 1 which are disposed in the transverse spaced array by the grids 16 axially spaced along fuel assembly length. The fuel rods 18A, 18B have identical constructions insofar as they each include an elongated hollow cladding tube 26 with a top end plug 28 and a bottom end plug 30 attached to and sealing opposite ends of the tube 26 and together with the tube 26 defining a sealed chamber 32 therein. A plurality of nuclear fuel pellets 34 are placed in an end-to-end abutting arrangement or stack within the chamber 32 and biased against the bottom end plug 30 by the action of a spring 36 placed in the chamber 32 between the top of the pellet stack and the top end plug 28. With respect to the above-described parts, the fuel rods 18A, 18B are identical to prior art fuel rods.

Further, similar to the above-described prior art IFBA rods, some of the fuel pellets of the fuel rods 18A, 18B are coated with burnable absorber or poison material. Specifically, the fuel rods 18A, 18B each has the same basic sections of fuel pellets as the prior art IFBA rods, namely, upper and lower sections U, L with strings of uncoated or unpoisoned fuel pellets 34A and a middle M section with a string of burnable absorber coated or poisoned fuel pellets 34B. One of the uncoated pellets 34A is shown in Figs. 4 and 5, where one coated pellet 34B is shown in Figs. 6 and 7. The coated pellet 34B is composed of a solid central cylinder of nuclear fuel or fissile material, such as enriched uranium, and a cylindrical circumferential coating 38 on the exterior continuous outer surface of the pellet. The coating 38 is preferably zirconium diboride ($ZrB_2$); alternatively the coated fuel pellets 34B can be composed of a burnable absorber or poison material, such as gadolinia, mixed integrally with the enriched uranium fuel.

However, with respect to a particular one fuel assembly in the reactor core containing the prior art IFBA rods, the lengths of the middle sections of coated pellets were all the same in providing the desired average length of burnable absorber for the particular fuel assembly. If a different average length of burnable absorber is desired for another fuel assembly, then middle sections of coated pellets of another length would be assembled in the fuel rods of that fuel assembly. This approach is not compatible with standardization and automation of the manufacture of fuel assemblies.

In contrast to the prior IFBA rod approach, in accordance with the principles of the present invention a particular one fuel assembly 10 can be customized to have a particular average length of burnable absorber by incorporating fuel rods 18A, 18B containing strings of coated or poisoned fuel pellets of a minimum of different (for example, two) standardized lengths and in a particular mixture of such fuel rods. Another fuel assembly can be customized to have a different average length of burnable absorber by incorporating fuel rods containing strings of poisoned fuel pellets of the minimum of different standardized lengths, but in a different mixture thereof.

If the lengths of the strings of poisoned fuel pellets 34B in the fuel rods 18A, 18B of a given fuel assembly are arranged such that they comprise a relatively small number (for example, two to five) of standard lengths mixed together, the neutronic behavior of that assembly will be very similar to that of one whose burnable absorber sections are all of the same average length. This behavior makes possible the production of custom-designed absorber lengths in the fuel rods from a selection of a few standard lengths of poisoned fuel pellet strings.

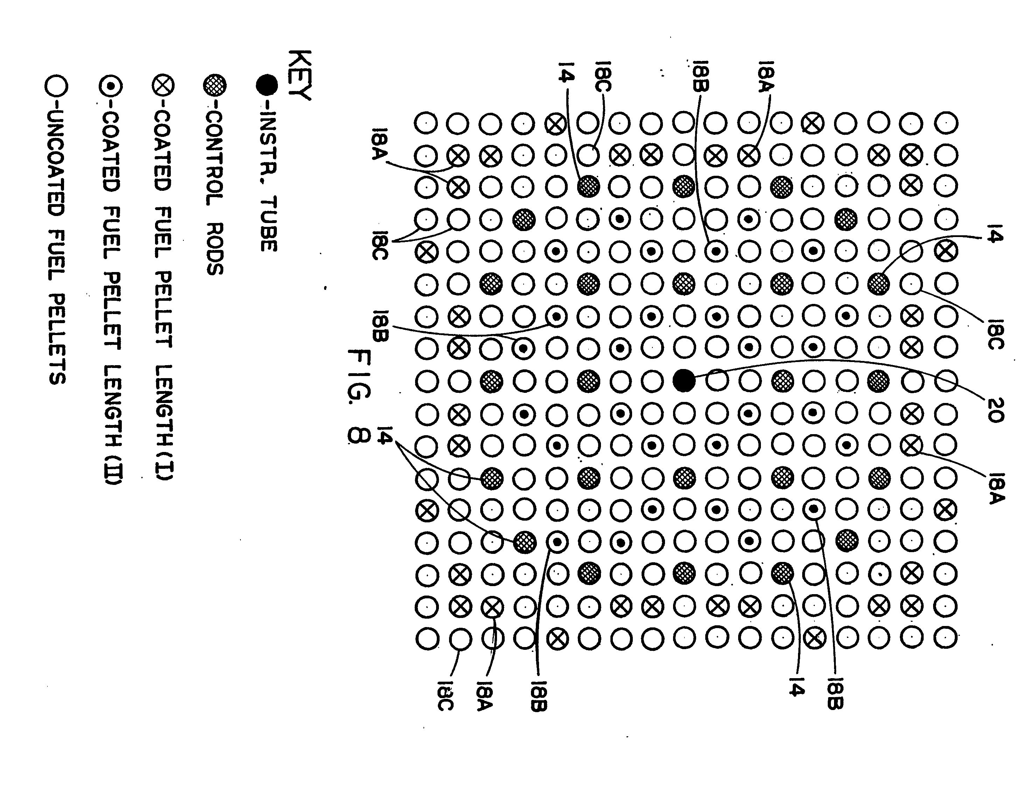

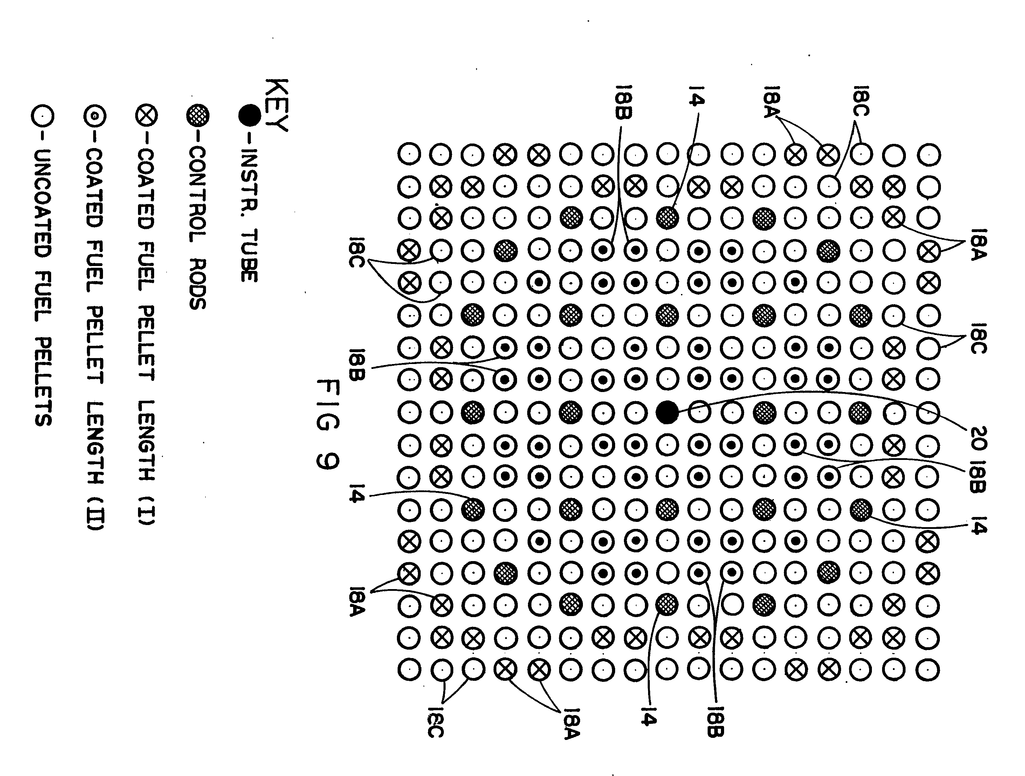

Figs. 8 and 9 each show at least three different groups of fuel rods 18A, 18B and 18C in two different patterns or mixtures. The fuel rods 18C have only pluralities of uncoated or nonpoisoned fuel pellets 34A, whereas the fuel rods 18A, 18B have middle sections M (Figs. 2 and 3) composed of strings of pluralities of coated or poisoned fuel pellets 34B of two different standardized lengths.

Also, included in the fuel assemblies are the guide thimbles 14 and instrumentation tube 20. In Figs. 8 and 9, the circles marked with "x" signify fuel rods 18A with coated fuel pellets in a string of one standard length, such as 302.26 centimeters (119 inches), and circles marked with a dot "." signify fuel rods 18B with coated fuel pellets in a string of another standard length, such as 342.90 centimeters (135 inches), whereby the effective average axial lengths of the absorber material across the fuel assemblies of Figs. 8 and 9 are 320.04 centimeters (126.0 inches) and 323.463 centimeters (127.348 inches), respectively. Preferably, all fuel rods 18 contain the same number of fuel pellets 34, and all fuel pellets 34 have the same axial length.

For purposes of simplicity, fuel rods 18A, 18B having only two standard lengths of strings of poisoned fuel pellets are illustrated. It should be understood that the minimum number of standard lengths used could be more than two. The present invention allows greater gradations of average lengths of burnable absorber since approximately seven time more fuel rods with standard lengths of strings of coated fuel pellets are used than in the prior approach of using separate discrete burnable absorber rods having standardized lengths of burnable absorber.

It is thought that the present invention and many of its attendant advantages will be understood from the foregoing description and it will be apparent that various changes may be made in the form, construction and arrangement thereof without departing from the spirit and scope of the invention or sacrificing all of its material advantages, the form hereinbefore described being merely a preferred or exemplary embodiment thereof.

## Claims

1. A fuel assembly (10) having a plurality of spaced apart fuel rods (18), characterized by:
    (a) a first group of fuel rods (18A) each containing first and second pluralities of nonpoisoned and poisoned fuel pellets (34A, 34B), said second plurality of poisoned fuel pellets (34B) in each fuel rod (18A) of said first group being of a first standard length; and
    (b) a second group of fuel rods (18B) each containing third and fourth pluralities of nonpoisoned and poisoned fuel pellets (34A, 34B), said fourth plurality of poisoned fuel pellets (34B) in each fuel rod (18B) of said second group being of a second standard length different than said first standard length, said second and fourth pluralities of poisoned fuel pellets (34B) providing an overall average length of burnable poison across said fuel assembly (10).

2. The fuel assembly (10) as recited in Claim 1, further including a third group of fuel rods (18C) containing only a plurality of nonpoisoned fuel pellets (34A).

3. The fuel assembly (10) as recited in Claim 1, wherein each fuel rod (18A, 18B) contains the same number of total fuel pellets (34).

4. The fuel assembly (10) as recited in Claim 1, wherein each poisoned fuel pellet (34B) is composed of a mixture of a poison and uranium.

5. The fuel assembly (10) as recited in Claim 1, wherein each poisoned fuel pellet (34B) is composed of a cylinder of uranium and a coating (38) of a poison applied around a continuous outer cylindrical circumferential surface of said cylinder.

6. The fuel assembly (10) as recited in Claim 1, wherein each fuel pellet (34) has the same axial length.

7. A method of customizing a fuel assembly (10) for providing an average length of burnable poison across said fuel assembly (10), said method characterized by the steps of:
    (a) assembling a first group of fuel rods (18A) each containing first and second pluralities of non-poisoned and poisoned fuel pellets (34A, 34B) wherein said second plurality of poisoned fuel pellets (34B) in each fuel rod (18A) of said first group being of a first standard length; and
    (b) assembling with said first group of fuel rods (18A) a second group of fuel rods (18B) each containing third and fourth pluralities of nonpoisoned and poisoned fuel pellets (34A, 34B) wherein said fourth plurality of poisoned fuel pellets (34B) in each fuel rod (18B) of said second group being of a second standard length different than said first standard length, said second and fourth pluralities of poisoned fuel pellets (34B) providing an overall average length of burnable poison across said fuel assembly (10).

8. The method as recited in Claim 1, further including the step of:
assembling with said first and second groups of fuel rods (18A, 18B) a third group of fuel rods (18C) containing only a plurality of nonpoisoned fuel pellets (34A).

FIG. 1

FIG. 2          FIG. 3

FIG. 5

FIG. 4

FIG. 7

FIG. 6

FIG. 8

KEY

● -INSTR. TUBE

▦ -CONTROL RODS

⊗ -COATED FUEL PELLET LENGTH (I)

⊙ -COATED FUEL PELLET LENGTH (II)

○ -UNCOATED FUEL PELLETS

FIG 9

KEY

● — INSTR. TUBE

◉ — CONTROL RODS

⊗ — COATED FUEL PELLET LENGTH (I)

⊙ — COATED FUEL PELLET LENGTH (II)

○ — UNCOATED FUEL PELLETS

**EUROPEAN SEARCH REPORT**

EP 89120651.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US - A - 4 728 487 (COONEY) <br> * Fig. 1,4,5; abstract, lines 12-19; column 2, line 59; column 3, line 56 - column 4, line 6; column 5, line 26; column 7, line 59 - column 8, line 13 * | 1,2,6-8 | G 21 C 3/326 |
| D,A | * Fig. 1 * | 3 | |
| X | US - A - 4 378 329 (UCHIKAWA) <br> * Fig. 3a-3c; abstract * | 1,2,4 | |
| A | * Column 7, lines 24-28 * | 3,6-8 | |
| X | GB - A - 1 280 366 (GENERAL ELECTRIC) <br> * Fig. 1,12A,13A; page 9, lines 90-124 * | 1,2 | |
| A | * Fig. 14; page 12, lines 41-44 * | 3,4,6-8 | |
| X | US - A - 4 629 599 (CROWTHER) <br> * Fig. 5A-6H; abstract * | 1,4 | TECHNICAL FIELDS SEARCHED (Int. Cl.4) <br><br> G 21 C 3/00 <br> G 21 C 7/00 |
| A | * Fig. 4 * | 2,3,7,8 | |
| D,A | US - A - 3 361 857 (ROSE) <br> * Fig. 1-3 * | 1-4,7,8 | |
| A | US - A - 4 342 722 (BLUM) <br> * Fig. 1,2 * | 1,5 | |

The present search report has been drawn up for all claims

| Place of search | Date of completion of the search | Examiner |
|---|---|---|
| VIENNA | 26-02-1990 | KRAL |